# EUROPÄISCHE PATENTSCHRIFT

(11) **EP 1 916 439 B1**
(45) Veröffentlichungstag und Bekanntmachung des Hinweises auf die Patenterteilung: **14.12.2016**
(21) Anmeldenummer: 07019401.4
(22) Anmeldetag: 04.10.2007
(51) Int. Cl.: F16F 15/134, F16D 41/20, F16F 15/131, F16F 15/139

(54) **Verfahren zum Herstellen eines Schlingenfederkupplungselements und Torsionsschwingungsdämpfer**
Method for manufacturing a sling coupling with spring and a torque oscillation attenuator
Procédé de fabrication d'un élément d'embrayage à ressort en boucle et amortisseur de vibrations de torsions

(30) Priorität: 26.10.2006 DE 102006050523; 14.05.2007 DE 102007022540; 14.05.2007 DE 102007022537; 18.05.2007 DE 102007023276
(43) Veröffentlichungstag der Anmeldung: 30.04.2008
(73) Patentinhaber: Schaeffler Technologies AG & Co. KG, 91074 Herzogenaurach (DE)
(72) Erfinder: Lászlo, Mán, Dr., 77833 Ottersweier-Unzhurst (DE)

(56) Entgegenhaltungen:
- WO-A-03/033933
- WO-A-2004/026525
- DE-A1- 10 223 815
- DE-A1- 19 721 236
- DE-A1- 19 802 251
- DE-A1- 19 847 764
- DE-C1- 4 100 842
- FR-A- 2 901 165
- GB-A- 2 297 602

## Beschreibung

Die Erfindung betrifft ein Verfahren zum Herstellen eines Schlingenfederkupplungselements mit einem Schlingenfederelement, insbesondere für einen Torsionsschwingungsdämpfer. Der Torsionsschwingungsdämpfer umfasst mindestens zwei entgegen der Wirkung einer Dämpfungseinrichtung mit in Umfangsrichtung wirkenden Energiespeichern zueinander verdrehbaren Teilen, von denen das eine mit einer Antriebsmaschine und das andere mit einer anzutreibenden Welle verbindbar ist, wobei zwischen den beiden Teilen zusätzlich ein mit der Dämpfungseinrichtung in Reihe geschalteter Drehmomentbegrenzer vorgesehen ist, der zumindest in eine der zwischen den beiden Teilen möglichen Relativverdrehrichtungen wirksam ist und mindestens eine Schlingenfederkupplung umfasst, die bei Erreichen eines vorbestimmten Verdrehwinkels zwischen den beiden Teilen als Freilauf wirkt.

Derartige Vorrichtungen sind beispielsweise aus der DE 197 21 236 A1 bekannt.

Aufgabe der Erfindung ist es, die Herstellung eines Schlingenfederkupplungselements mit einem Schlingenfederelement, insbesondere für einen Torsionsschwingungsdämpfer gemäß dem Oberbegriff des Anspruchs 4, zu vereinfachen und/oder die Lebensdauer eines derartigen Schlingenfederkupplungselements zu verlängern.

Die Aufgabe ist bei einem Verfahren zum Herstellen eines Schlingenfederkupplungselements mit einem Schlingenfederelement, insbesondere für einen Torsionsschwingungsdämpfer, dadurch gelöst, dass zunächst ein Ringelement hergestellt wird, in welchem in mindestens einem weiteren Bearbeitungsschritt durch Laserstrahlschneiden Federschlingen erzeugt werden. Gemäß der Erfindung wird die für die Schlingenfederwirkung erforderliche radiale Spiralkontur der Federschlingen nachträglich, also nach der Herstellung des Ringelements, durch dreidimensionales Laserstrahlschneiden erzeugt.

Ein bevorzugtes Ausführungsbeispiel des Verfahrens ist dadurch gekennzeichnet, dass das Ringelement spanend, insbesondere durch Drehen, hergestellt wird. Das Ringelement ist vorzugsweise aus insbesondere gehärtetem Federstahl gebildet. Das Ringelement wird zunächst auf die erforderliche Innen- und Außenkontur abgedreht.

Ein erfindungsgemäßes Verfahren ist dadurch gekennzeichnet, dass in dem weiteren beziehungsweise mindestens einem weiteren Bearbeitungsschritt durch Laserstrahlschneiden Abstützbereiche für die in Umfangrichtung wirkenden Energiespeicher erzeugt werden. Die Abstützbereiche sind vorzugsweise an Zungen vorgesehen, die sich von einer Windung, insbesondere einer Endwindung, der Schlingenfeder radial nach innen erstrecken.

Ein weiteres bevorzugtes Ausführungsbeispiel des Verfahrens ist dadurch gekennzeichnet, dass in dem weiteren beziehungsweise mindestens einem weiteren Bearbeitungsschritt durch Laserstrahlschneiden Ansteuerbereiche für eine Freilaufwirkung des Schlingenfederkupplungselements erzeugt werden. Die Ansteuerbereiche sind vorzugsweise an Zungen vorgesehen, die sich von einer Windung, insbesondere einer Endwindung, der Schlingenfeder radial nach innen erstrecken. Die Ansteuerbereiche können auch in einem Arbeitsschritt zusammen mit den Abstützbereichen erzeugt werden.

Die oben angegebene Aufgabe ist bei einem Torsionsschwingungsdämpfer mit mindestens zwei entgegen der Wirkung einer Dämpfungseinrichtung mit in Umfangsrichtung wirkenden Energiespeichern zueinander verdrehbaren Teilen, von denen das eine mit einer Antriebsmaschine und das andere mit einer anzutreibenden Welle verbindbar ist, wobei zwischen den beiden Teilen zusätzlich ein mit der Dämpfungseinrichtung in Reihe geschalteter Drehmomentbegrenzer vorgesehen ist, der zumindest in eine der zwischen den beiden Teilen möglichen Relativverdrehrichtungen wirksam ist und mindestens eine Schlingenfederkupplung umfasst, die bei Erreichen eines vorbestimmten Verdrehwinkels zwischen den beiden Teilen als Freilauf wirkt, dadurch gelöst, dass die Schlingenfederkupplung mindestens ein Schlingenfederkupplungselement umfasst, das gemäß dem vorab beschriebenen Verfahren hergestellt ist. Das Schlingenfederkupplungselement wird auch als Schlingenfederelement oder als Schlingenfeder bezeichnet.

Ein bevorzugtes Ausführungsbeispiel des Torsionsschwingungsdämpfers ist dadurch gekennzeichnet, dass sich von den Endschlingen der Schlingenfeder jeweils zwei Zungen radial nach innen erstrecken, die Abstützbereiche für die in Umfangsrichtung wirkenden Energiespeicher aufweisen. Die Zungen können deutlich stabiler ausgeführt werden als bei herkömmlichen Schlingenfedern und sind vorzugsweise um 180 Grad versetzt zueinander angeordnet, so dass die Zungen einer Endschlinge diametral gegenüberliegen.

Ein weiteres bevorzugtes Ausführungsbeispiel des Torsionsschwingungsdämpfers ist dadurch gekennzeichnet, dass sich von den Endschlingen der Schlingenfeder jeweils zwei weitere Zungen radial nach innen erstrecken, die Ansteuerbereiche für die Freilaufwirkung der Schlingenfeder aufweisen. Das liefert den Vorteil, dass deutlich weniger Einzelteile als bei herkömmlichen Torsionsschwingungsdämpfern benötigt werden. Da jegliche Steuerringe und Zusatzteile entfallen, können mehr Windungen in das Schlingenfederelement integriert werden. Dadurch kann der Drahtquerschnitt des Schlingenfederelements und somit das Gesamtgewicht bei gleich bleibendem übertragbarem Drehmoment und einer sicheren Funktion reduziert werden.

Ein weiteres bevorzugtes Ausführungsbeispiel des Torsionsschwingungsdämpfers ist dadurch gekennzeichnet, dass die weiteren Zungen mit den Ansteuerbereichen in Umfangsrichtung jeweils zwischen den zwei Zungen mit den Abstützbereichen angeordnet sind. Vorzugsweise sind an jeder Endschlinge vier Zungen gleichmäßig über den Umfang der Endschlinge verteilt.

Ein weiteres bevorzugtes Ausführungsbeispiel des Torsionsschwingungsdämpfers ist dadurch gekennzeichnet, dass an den in Umfangsrichtung wirkenden Energiespeichern Anschlagelemente für eines der verdrehbaren Teile angebracht sind, die Steuernasen für die Schlingenfeder aufweisen. Die Steuernasen kommen bei bestimmten Verdrehwinkeln an zugehörigen Beaufschlagungsbereichen oder Ansteuerbereichen des Schlingenfederelements zur Anlage und sperren oder lösen die Schlingenfederkupplung.

Ein weiteres bevorzugtes Ausführungsbeispiel des Torsionsschwingungsdämpfers ist dadurch gekennzeichnet, dass die Anschlagelemente jeweils einen Anschlagkörper aufweisen, von dem sich ein Schaft in den zugehörigen Energiespeicher hinein erstreckt. Bei den Energiespeichern handelt es sich vorzugsweise um bogenförmige Schraubendruckfedern. Die zum Beispiel napfförmigen oder tellerartigen Anschlagkörper sind in Umfangsrichtung zwischen einem der verdrehbaren Teile und dem zugehörigen Energiespeicher angeordnet. Der Schaft dient dazu, den Anschlagkörper mit den Steuernasen für das Schlingenfederelement sicher an dem Ende des zugehörigen Energiespeichers zu halten.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: einen Halbschnitt durch einen erfindungsgemäßen Torsionsschwingungsdämpfer;
- Figur 2: eine perspektivische Darstellung eines flanschartigen Bauteils mit einem Dämpfer und einer Drehmomentbegrenzungseinrichtung;
- Figur 3: eine ähnliche perspektivische Darstellung wie in Figur 2, wobei zusätzlich ein Sekundärschwungrad dargestellt ist;
- Figur 4: eine perspektivische Darstellung des flanschartigen Bauteils aus Figur 2 mit dem Dämpfer ohne Drehmomentbegrenzungseinrichtung;
- Figur 5: eine perspektivische Darstellung eines Anschlagelements;
- Figur 6: eine Schlingenfeder in der Vorderansicht und
- Figur 7: eine perspektivische Darstellung der Schlingenfeder aus Figur 6.

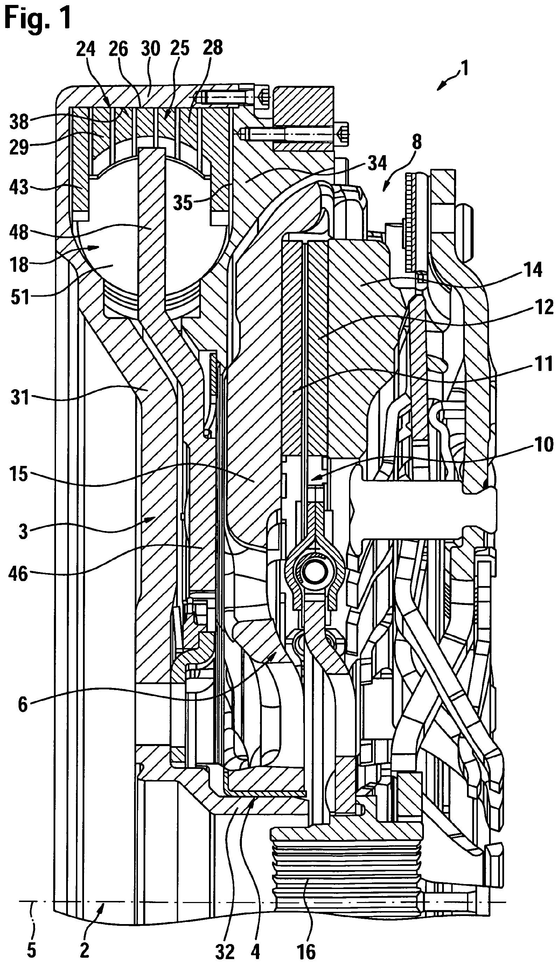

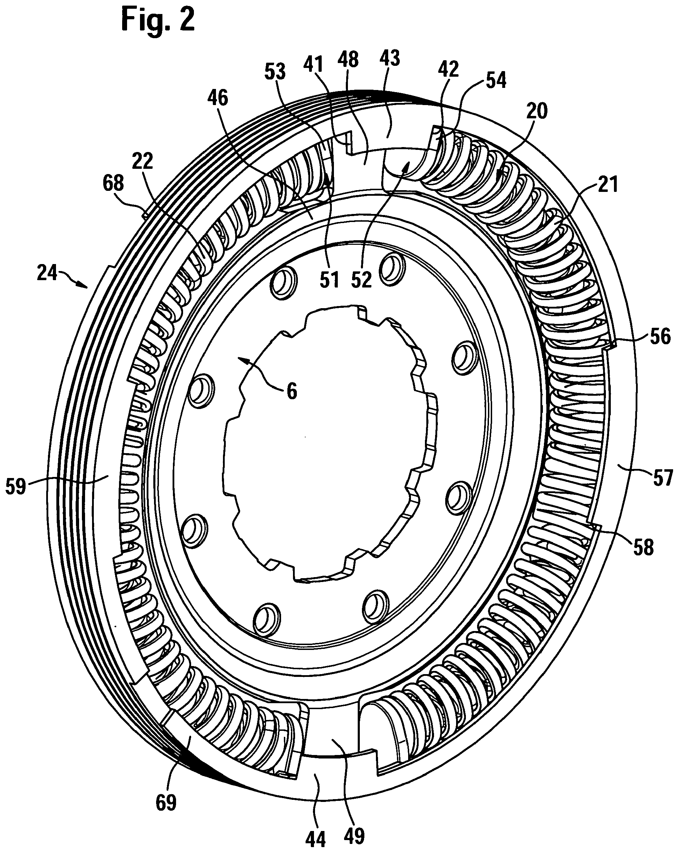

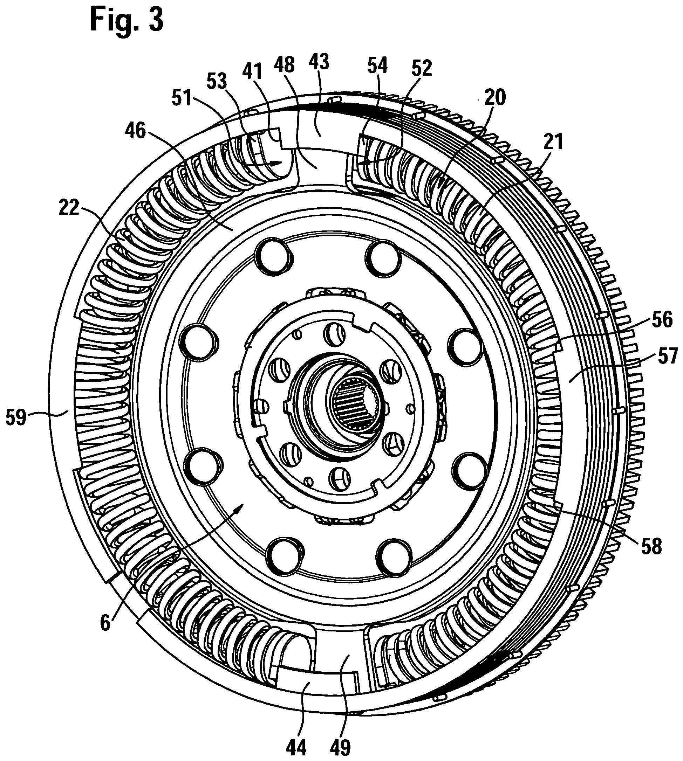

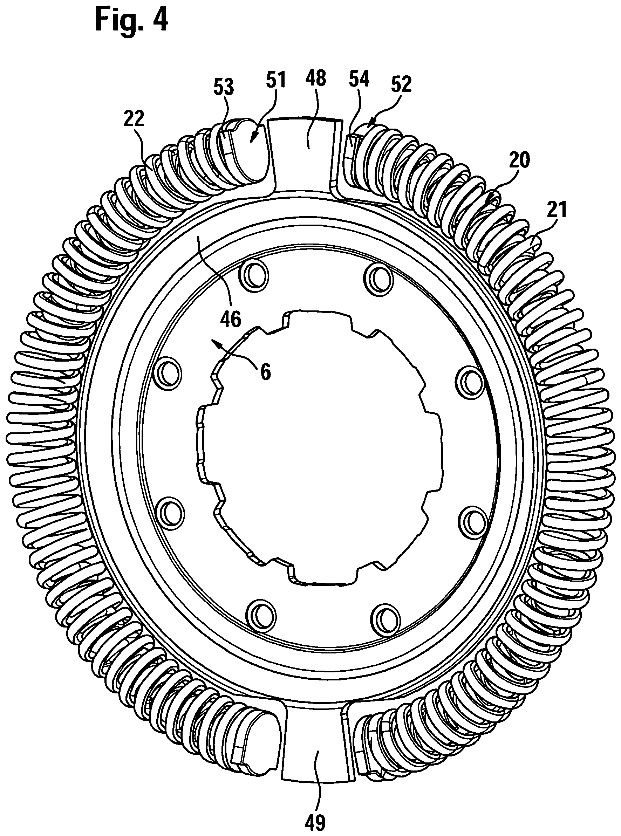

Der in Figur 1 im Halbschnitt und den Figuren 2 bis 4 perspektivisch teilweise dargestellte Torsionsschwingungsdämpfer 1 bildet bei dem dargestellten Ausführungsbeispiel ein so genanntes Zweimassenschwungrad 2. Zweimassenschwungräder sind beispielsweise durch die deutschen Offenlegungsschriften DE 198 34 728 A1 und DE 41 17 584 A1 bekannt geworden.

Das Zweimassenschwungrad 2 umfasst ein mit der Abtriebswelle eines Motors, wie der Kurbelwelle einer Brennkraftmaschine, verbindbares Primärschwungrad 3 und ein gegenüber diesem über eine Lagerung 4 zur Drehachse 5 konzentrisch gelagertes Sekundärschwungrad 6. Das Sekundärschwungrad 6 dient zur Aufnahme einer Reibungskupplung 8, die eine Kupplungsscheibe 10 mit Reibbelägen 11, 12 aufweist. Die Reibungskupplung 8 umfasst eine Druckplatte 14, die mit Hilfe einer Betätigungseinrichtung in axialer Richtung, das heißt parallel zur Drehachse 5. begrenzt, verlagerbar ist, um die Reibbeläge 11, 12 der Kupplungsscheibe 10 zwischen der Druckplatte 14 und einer Gegendruckplatte 15 einzuklemmen, die Bestandteil des Sekundärschwungrads 6 ist. Die Kupplungsscheibe 10 ist über eine Verzahnung 16 drehfest mit einer (nicht dargestellten) Getriebeeingangswelle eines Getriebes verbunden beziehungsweise verbindbar.

Zwischen dem Primärschwungrad 3 und dem Sekundärschwungrad 6 ist eine Dämpfungseinrichtung 18, die wenigstens einen drehelastischen Dämpfer 20 umfasst, vorgesehen. Der drehelastische Dämpfer 20 umfasst bei dem dargestellten Ausführungsbeispiel wenigstens zwei bogenartig ausgebildete Energiespeicher 21, 22, die jeweils aus mindestens einer Schraubendruckfeder aus Stahl bestehen können. Zur Bildung eines Energiespeichers 21, 22 können jedoch auch mehrere Schraubendruckfedern in Reihe hintereinander angeordnet werden, die entweder unmittelbar über ihre Endwindungen sich aneinander abstützen oder aber unter Zwischenlegung von keilförmigen Zwischenelementen hintereinander geschaltet sind. Die einzelnen Federn können dabei, wie bereits erwähnt, bogenförmig ausgebildet sein oder aber auch bei entsprechend großer Anzahl von Federn jeweils eine im Wesentlichen gerade Gestalt besitzen. Solche Energiespeicher sind beispielsweise durch den bereits erwähnten Stand der Technik bekannt geworden.

Die Dämpfungseinrichtung 18 beziehungsweise der drehelastische Dämpfer 20 ist in Reihe geschaltet mit einer Drehmomentbegrenzungseinrichtung 24, die hier als Freilaufeinrichtung 25 ausgeführt ist. Die Freilaufeinrichtung 25 ist als Schlingenfederkupplung 26 ausgeführt, die wenigstens eine Schlingenfeder 28 umfasst. Die Schlingenfeder 28 weist, wie dargestellt, mehrere, axial hintereinander angeordnete Windungen 29 auf, die auch als Federschlingen bezeichnet werden. Bei dem dargestellten Ausführungsbeispiel besitzt die Schlingenfeder 28 eine Vielzahl von axial nebeneinander angeordneten und einstückig ausgebildeten Windungen 29.

Durch entsprechende Beaufschlagung der Windungen 29 in Umfangsrichtung können diese tendenzmäßig im Sinne einer Durchmesservergrößerung oder Durchmesserverkleinerung verformt werden. Bei dem dargestellten Ausführungsbeispiel werden die Windungen 29 von einem ringförmigen beziehungsweise hülsenförmigen Bereich 30 umgriffen, der hier vom Primärschwungrad 3 getragen ist. Bei dem dargestellten Ausführungsbeispiel ist der hülsenförmige Bereich 30 mit einem Blechformteil 31 einstückig ausgebildet, das radial innen einen ringförmigen Ansatz 32 trägt, der zur Lagerung des Sekundärschwungrads 6 dient.

Am axialen Ende des ringförmigen Bereichs 30 ist eine radial nach innen weisende Wandung 34 befestigt, die zusammen mit dem Blechformteil 31 und dem hülsenförmigen Bereich 30 eine ringartige Kammer 35 begrenzt, in der die Schlingenfederkupplung 26 und hier auch der drehelastische Dämpfer 20 aufgenommen sind. In vorteilhafter Weise kann in der Kammer 35 eine vorbestimmte Menge an viskosem Medium, wie zum Beispiel Fett oder Öl, vorgesehen sein.

Bei dem dargestellten Ausführungsbeispiel ist im Drehmomentfluss vom Antriebsmotor zum Getriebe die Drehmomentbegrenzungseinrichtung 24 der Dämpfungseinrichtung 18 vorgeschaltet. Durch entsprechende kinematische Umkehrung kann die Drehmomentbegrenzungseinrichtung 24 der Dämpfungseinrichtung 18 jedoch auch nachgeschaltet werden.

Aus Figur 1 ist erkennbar, dass bei einer Beaufschlagung der Windungen 29 im Sinne einer Durchmesservergrößerung diese sich radial an der Innenfläche 38 des ringförmigen Bereichs 30 abstützen. Die Abstützkraft ist dabei umso größer, je größer die in Umfangsrichtung auf die Windungen 29 einwirkende Kraft ist, welche die vorerwähnte Durchmesservergrößerung bewirkt. Aufgrund der zwischen den Windungen 29 und der Abstützfläche 38 vorhandenen Reibung kann das vom Antriebsmotor abgegebene Drehmoment übertragen werden.

Die Verriegelung beziehungsweise Sperrung der als Freilaufeinrichtung 25 ausgebildeten Drehmomentbegrenzungseinrichtung 24 erfolgt mittels der Energiespeicher 21, 22. Hierfür besitzt bei dem dargestellten Ausführungsbeispiel die Schlingenfeder 28 eine Endwindung, die Abstütz- beziehungsweise Beaufschlagungsbereiche 41, 42 für die als Schraubendruckfedern ausgebildeten Energiespeicher 21, 22 trägt. Die Beaufschlagungsbereiche 41, 42 sind an einer Zunge 43 vorgesehen, die sich von der in Figur 2 sichtbaren Endwindung der Schlingenfeder 28 radial nach innen erstreckt. Eine weitere Zunge 44 erstreckt sich diametral zu der Zunge 43, so dass die beiden Zungen 43 und 44 um 180 Grad versetzt zueinander angeordnet sind. Die Zungen 43, 44 sind einstückig mit der Endwindung der Schlingenfeder 28 verbunden.

Zur Abstützung beziehungsweise Beaufschlagung der Energiespeicher 21, 22 umfasst das Sekundärschwungrad 6 ein flanschartiges Bauteil 46, das sich in radialer Richtung nach außen erstreckende Ausleger 48, 49 aufweist. Die Ausleger 48, 49 sind einstückig mit dem flanschartigen Bauteil 46 verbunden, das drehfest mit dem Sekundärschwungrad 6 verbunden ist, beispielsweise mittels Nietverbindungen. Bezüglich derartiger Verbindungen wird beispielsweise auf die deutsche Offenlegungsschrift DE 103 59 635 A1 verwiesen.

Falls erforderlich, kann jedoch zwischen dem flanschartigen Bauteil 46 und dem Sekundärschwungrad 6 eine weitere Dämpfungseinrichtung und/oder Drehmomentbegrenzungseinrichtung vorgesehen werden.

An den Enden der in Umfangsrichtung wirkenden Energiespeicher 21, 22 sind Anschlagelemente 51, 52 angebracht, die zur Krafteinleitung dienen. An den Anschlagelementen 51, 52 sind Steuernasen 53, 54 ausgebildet, die mit Ansteuerbereichen zusammenwirken, um ein Lösen beziehungsweise Durchrutschen der Schlingenfederkupplung 26 zu bewirken. Die Steuernase 54 wirkt mit einem Ansteuerbereich 56 zusammen, der an einer Zunge 57 ausgebildet ist, die sich von der Endwindung der Schlingenfeder 28 radial nach innen erstreckt. An der Zunge 57 ist in Umfangsrichtung entgegengesetzt zu dem Ansteuerbereich 56 ein weiterer Ansteuerbereich 58 vorgesehen. Diametral zu der Zunge 57 ist eine weitere Zunge 59 vorgesehen, die sich um 180 Grad versetzt zu der Zunge 57 von der Endwindung der Schlingenfeder 28 radial nach innen erstreckt. Somit sind an der in Figur 2 sichtbaren Endwindung der Schlingenfeder 28 insgesamt vier sich radial nach innen erstreckende Zungen 43, 44, 57, 59 vorgesehen. In dem Ausführungsbeispiel sind die vier Zungen gleichmäßig über den Umfang der Entwindung der Schlingenfeder 28 verteilt.

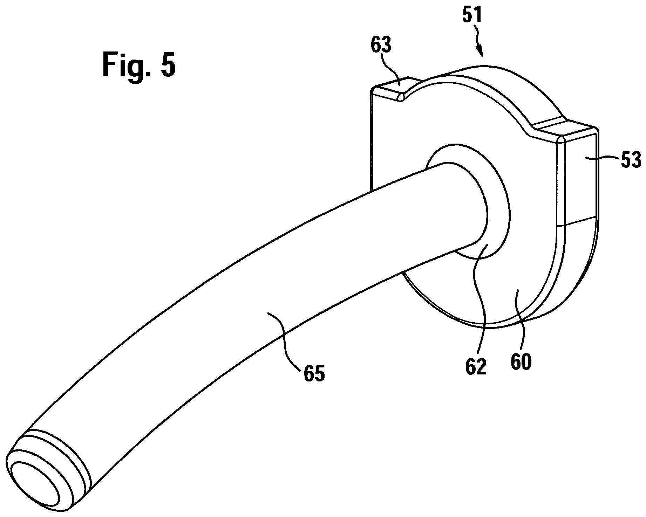

In Figur 5 ist das Anschlagelement 51 vergrößert und allein perspektivisch dargestellt. In dieser Darstellung sieht man, dass das Anschlagelement 51 einen flächigen Anschlagkörper 60 umfasst, der zwei Ecken aufweist, welche die Steuernasen 53 und 63 bilden. Von dem Anschlagkörper 60 geht ein Schaft 65 aus, der leicht gekrümmt ist. Die Krümmung des Schafts 65 ist an die bogenförmige Gestalt des zugehörigen Energiespeichers 22 angepasst, der auch als Bogenfeder bezeichnet wird. Der Anschlagkörper 60 wird auch als Napf bezeichnet. Der Schaft 65 wird so in die zugehörige Bogenfeder 22 eingesteckt, dass das zugehörige Anschlagelement 51 mit einem sich zwischen Schaft 65 und Anschlagkörper 60 erweiternden Bereich 62 in dem Bogenfederende fest eingeklemmt wird. Die an dem Anschlagkörper 60 vorgesehenen Steuernasen 53, 63 lösen ein Durchrutschen beziehungsweise Lösen der Schlingenfederkupplung 26 aus, wenn sie an den zugehörigen Ansteuerbereich 56 der Zungen 57 zur Anlage kommen.

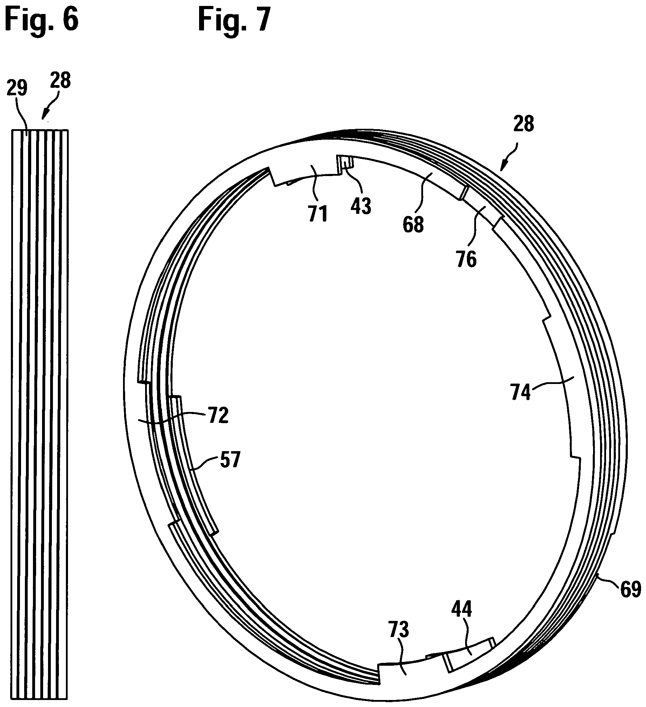

In den Figuren 6 und 7 ist die erfindungsgemäße Schlingenfeder 28 in verschiedenen Ansichten dargestellt. Die Schlingenfeder 28 ist aus einem Stück gebildet und umfasst zwei entgegengesetzte Enden 68, 69. Die zugehörigen Endwindungen sind jeweils mit vier Zungen 71 bis 74 und 43, 57, 44, 59 ausgestattet, die jeweils gleichmäßig über den Umfang der zugehörigen Endwindung verteilt sind und sich radial nach innen erstrecken. Mit 76 ist in Figur 7 ein Freiraum bezeichnet, der zur Aufnahme des Federendes 68 dient, wenn sich die Schlingenfeder 28 verformt.

Im Rahmen der vorliegenden Erfindung wurde herausgefunden, dass die Schlingenfederenden 68, 69 eine Schwachstelle der Schlingenfeder 28 darstellen. Bei einer zweiseitigen Krafteinleitung im Zug- und Schubbetrieb wird die zum Öffnen und Schließen der Schlingenfederkupplung erforderlich Kraft abwechselnd in die Schlingenfeder 28 eingebracht. Dabei wird ein zur Herstellung von herkömmlichen Schlingenfedern verwendeter Profildraht deutlich geschwächt, wodurch die Belastbarkeit der zugehörigen Schlingenfederkupplung vermindert wird. Gemäß einem wesentlichen Aspekt der vorliegenden Erfindung wird die Schlingenfeder 28 aus einem geschlossenen Ring aus gehärtetem Federstahlmaterial hergestellt, der zuerst auf die erforderliche Innen- und Außenkontur abgedreht wird. Die erforderliche radiale Spiralkontur der Schlingenfeder 28 wird nachträglich durch dreidimensionales Laserstrahlschneiden erzeugt. Gleichzeitig werden die Zungen 71 bis 74 und 43, 57, 44, 59 zum Schließen und Öffnen der Schlingenfederkupplung 26 in axialer Richtung ebenfalls durch Laserstrahlschneiden erzeugt. Die auf diese Art hergestellten Zungen sind sehr stabil, da das Material nicht geschwächt wird. Darüber hinaus kann durch das erfindungsgemäße Verfahren eine festigkeitsmäßig optimal gestaltete Kontur erzeugt werden.

**Bezugszeichenliste**

| | | | |
|---|---|---|---|
| 1. | Torsionsschwingungsdämpfer | 43. | Zunge |
| 2. | Zweimassenschwungrad | 44. | Zunge |
| 3. | Primärschwungrad | 46. | flanschartiges Bauteil |
| 4. | Lagerung | 48. | Ausleger |
| 5. | Drehachse | 49. | Ausleger |
| 6. | Sekundärschwungrad | 51. | Anschlagelement |
| 8. | Reibungskupplung | 52. | Anschlagelement |
| 10. | Kupplungsscheibe | 53. | Steuernase |
| 11. | Reibbelag | 54. | Steuernase |
| 12. | Reibbelag | 56. | Ansteuerbereich |
| 14. | Druckplatte | 57. | Zunge |
| 15. | Gegendruckplatte | 58. | Zunge |
| 16. | Verzahnung | 59. | Zunge |
| 18. | Dämpfungseinrichtung | 60. | Anschlagkörper |
| 20. | Dämpfer | 62. | erweiterter Bereich |
| 21. | Energiespeicher | 63. | Steuernase |
| 22. | Energiespeicher | 65. | Schaft |
| 24. | Drehmomentbegrenzungseinrichtung | 68. | Ende |
| 25. | Freilaufeinrichtung | 69. | Ende |
| 26. | Schlingenfederkupplung | 71. | Zunge |
| 28. | Schlingenfeder | 72. | Zunge |
| 29. | Windungen | 73. | Zunge |
| 30. | hülsenförmiger Bereich | 74. | Zunge |
| 31. | Blechformteil | 76. | Freiraum |
| 32. | ringförmiger Ansatz | | |
| 34. | Wandung | | |
| 35. | ringartige Kammer | | |
| 38. | Innenfläche | | |
| 41. | Beaufschlagungsbereich | | |
| 42. | Beaufschlagungsbereich | | |

## Patentansprüche

1. Verfahren zum Herstellen eines Schlingenfederkupplungselements mit einem Schlingenfederelement (28), insbesondere für einen Torsionsschwingungsdämpfer (1), **dadurch gekennzeichnet, dass** zunächst ein Ringelement hergestellt wird, in welchem in mindestens einem weiteren Bearbeitungsschritt durch Laserstrahlschneiden Federschlingen (29) erzeugt werden, wobei die für die Schlingenfederwirkung erforderliche radiale Spiralkontur der Federschlingen (29) nachträglich, also nach der Herstellung des Ringelements, durch dreidimensionales Laserstrahlschneiden erzeugt wird, wobei in dem weiteren beziehungsweise mindestens einem weiteren Bearbeitungsschritt durch Laserstrahlschneiden Abstützbereiche (41, 42) für die in Umfangsrichtung wirkenden Energiespeicher (21, 22) erzeugt werden.

2. Verfahren nach Anspruch 1, **dadurch gekennzeichnet, dass** das Ringelement spanend, insbesondere durch Drehen, hergestellt wird.

3. Verfahren nach einem der vorhergehenden Ansprüche, **dadurch gekennzeichnet, dass** in dem weiteren beziehungsweise mindestens einem weiteren Bearbeitungsschritt durch Laserstrahlschneiden Ansteuerbereiche (56,58) für eine Freilaufwirkung der Schlingenfederkupplung (26) erzeugt werden.

4. Torsionsschwingungsdämpfer mit mindestens zwei entgegen der Wirkung einer Dämpfungseinrichtung (18) mit in Umfangsrichtung wirkenden Energiespeichern (21,22) zueinander verdrehbaren Teilen (3,6), von denen das eine mit einer Antriebsmaschine und das andere mit einer anzutreibenden Welle verbindbar ist, wobei zwischen den beiden Teilen (3,6) zusätzlich ein mit der Dämpfungseinrichtung (18) in Reihe geschalteter Drehmomentbegrenzer (24) vorgesehen ist, der zumindest in eine der zwischen den beiden Teilen (3,6) möglichen Relativverdrehrichtungen wirksam ist und mindestens eine Schlingenfederkupplung (26) umfasst, die bei Erreichen eines vorbestimmten Verdrehwinkels zwischen den beiden Teilen (3,6) als Freilauf wirkt, **dadurch gekennzeichnet, dass** die Schlingenfederkupplung (26) mindestens ein Schlingenfederkupplungselement umfasst, das gemäß einem Verfahren nach einem der vorhergehenden Ansprüche hergestellt ist.

5. Torsionsschwingungsdämpfer nach Anspruch 4, **dadurch gekennzeichnet, dass** sich von den Endschlingen der Schlingenfeder (28) jeweils zwei Zungen (43,44) radial nach innen erstrecken, die Abstützbereiche (41,42) für die in Umfangsrichtung wirkenden Energiespeicher (21,22) aufweisen.

6. Torsionsschwingungsdämpfer nach Anspruch 5, **dadurch gekennzeichnet, dass** sich von den Endschlingen der Schlingenfeder (28) jeweils zwei weitere Zungen (57,59) radial nach innen erstrecken, die Ansteuerbereiche (56,58) für die Freilaufwirkung der Schlingenfederkupplung (26) aufweisen.

7. Torsionsschwingungsdämpfer nach Anspruch 6, **dadurch gekennzeichnet, dass** die weiteren Zungen (57,59) mit den Ansteuerbereichen in Umfangsrichtung jeweils zwischen den zwei Zungen (43,44) mit den Abstützbereichen angeordnet sind.

8. Torsionsschwingungsdämpfer nach einem der Ansprüche 4 bis 7, dadurch gekenn- zeichnet, dass an den in Umfangsrichtung wirkenden Energiespeichern Anschlagelemente (51,52) für eines der verdrehbaren Teile angebracht sind, die Steuernasen (53,54) für die Schlingenfeder (28) aufweisen.

9. Torsionsschwingungsdämpfer nach Anspruch 8, **dadurch gekennzeichnet, dass** die Anschlagelemente (51,52) jeweils einen Anschlagkörper (60) aufweisen, von dem sich ein Schaft (65) in den zugehörigen Energiespeicher (22) hinein erstreckt.

## Claims

1. Method for producing a grid-spring coupling element having a grid-spring element (28), in particular for a torsional vibration damper (1), **characterized in that** first of all a ring element is produced, in which spring loops (29) are produced in at least one further machining step by way of laser cutting, the radial spiral contour of the spring loops (29) which is required for the grid spring action being produced subsequently, that is to say after the production of the ring element, by way of three-dimensional laser cutting, supporting regions (41, 42) for the energy stores (21, 22) which act in the circumferential direction being produced in the further or at least one further machining step by way of laser cutting.

2. Method according to Claim 1, **characterized in that** the ring element is produced in a cutting manner, in particular by way of turning.

3. Method according to either of the preceding claims, **characterized in that** actuating regions (56, 58) for a freewheel action of the grid-spring coupling (26) are produced in the further or at least one further machining step by way of laser cutting.

4. Torsional vibration damper having at least two parts (3, 6) which can be rotated with respect to one another counter to the action of a damping device (18) with energy stores (21, 22) which act in the circumferential direction, of which parts (3, 6) one can be connected to the drive machine and the other can be connected to a shaft to be driven, a torque limiter (24) which is connected in series with the damping device (18) additionally being provided between the two parts (3, 6), which torque limiter (24) is active at least in one of the possible relative rotational directions between the two parts (3, 6) and comprises at least one grid-spring coupling (26) which, if a predefined rotary angle is reached, acts as a freewheel between the two parts (3, 6), **characterized in that** the grid-spring coupling (26) comprises at least one grid-spring coupling element which is produced in accordance with a method according to one of the preceding claims.

5. Torsional vibration damper according to Claim 4, **characterized in that** in each case two tongues (43, 44) extend radially inwards from the end loops of the grid springs (28), which tongues (43, 44) have supporting regions (41, 42) for the energy stores (21, 22) which act in the circumferential direction.

6. Torsional vibration damper according to Claim 5, **characterized in that** in each case two further tongues (57, 59) extend radially inwards from the end loops of the grid springs (28), which tongues (57, 59) have actuating regions (56, 58) for the freewheel action of the grid-spring coupling (26).

7. Torsional vibration damper according to Claim 6, **characterized in that** the further tongues (57, 59) with the actuating regions are arranged in the circumferential direction in each case between the two tongues (43, 44) with the supporting regions.

8. Torsional vibration damper according to one of Claims 4 to 7, **characterized in that** stop elements (51, 52) for one of the rotatable parts are attached to the energy stores which act in the circumferential direction, which stop elements (51, 52) have control lugs (53, 54) for the grid springs (28).

9. Torsional vibration damper according to Claim 8, **characterized in that** the stop elements (51, 52) have in each case one stop body (60), from which a shank (65) extends into the associated energy store (22).

## Revendications

1. Procédé de fabrication d'un élément d'embrayage à ressort en boucle comprenant un élément de ressort en boucle (28), en particulier pour un amortisseur d'oscillations de torsion (1), **caractérisé en ce qu'**un élément annulaire est d'abord fabriqué, dans lequel, dans au moins une étape d'usinage supplémentaire, des boucles de ressort (29) sont produites par découpage au laser, le contour en spirale radial nécessaire pour l'effet de ressort en boucle des boucles de ressort (29) étant produit ultérieurement, c'est-à-dire après la fabrication de l'élément annulaire, par découpage au laser tridimensionnel, des régions de support (41, 42) pour les accumulateurs d'énergie (21, 22) agissant dans la direction périphérique étant produites par découpage au laser au cours de l'étape d'usinage supplémentaire ou au cours de l'au moins une étape d'usinage supplémentaire.

2. Procédé selon la revendication 1, **caractérisé en ce que** l'élément annulaire est fabriqué par enlèvement de copeaux, en particulier par tournage.

3. Procédé selon l'une quelconque des revendications précédentes, **caractérisé en ce qu'**au cours de l'étape d'usinage supplémentaire ou au cours de l'au moins une étape d'usinage supplémentaire, des régions de commande (56, 58) sont produites par découpage au laser pour un effet de roue libre de l'embrayage à ressort en boucle (26).

4. Amortisseur d'oscillations de torsion comprenant au moins deux pièces (3, 6) pouvant tourner l'une par rapport à l'autre à l'encontre de l'effet d'un dispositif d'amortissement (18) avec des accumulateurs d'énergie (21, 22) agissant dans la direction périphérique, l'une des pièces pouvant être connectée à une machine d'entraînement et l'autre pièce pouvant être connectée à un arbre à entraîner, un limiteur de couple (24) monté en série avec le dispositif d'amortissement (18) étant en outre prévu entre les deux pièces (3, 6), lequel agit au moins dans l'un des sens de rotation relative possibles entre les deux pièces (3, 6) et comprenant au moins un embrayage à ressort en boucle (26) qui, à l'obtention d'un angle de rotation prédéterminé entre les deux pièces (3, 6), agit en tant que roue libre, **caractérisé en ce que** l'embrayage à ressort en boucle (26) comprend au moins un élément d'embrayage à ressort en boucle qui est fabriqué selon un procédé selon l'une quelconque des revendications précédentes.

5. Amortisseur d'oscillations de torsion selon la revendication 4, **caractérisé en ce qu'**à chaque fois deux langues (43, 44) s'étendent radialement vers l'intérieur depuis les boucles d'extrémité du ressort en boucle (28), lesquelles présentent des régions de support (41, 42) pour les accumulateurs d'énergie (21, 22) agissant dans la direction périphérique.

6. Amortisseur d'oscillations de torsion selon la revendication 5, **caractérisé en ce que** deux autres langues (57, 59) s'étendent radialement vers l'intérieur à chaque fois depuis les boucles d'extrémité du ressort en boucle (28), lesquelles présentent des régions de commande (56, 58) pour l'effet de roue libre de l'embrayage à ressort en boucle (26).

7. Amortisseur d'oscillations de torsion selon la revendication 6, **caractérisé en ce que** les autres langues (57, 59) sont disposées avec les régions de commande dans la direction périphérique à chaque fois entre les deux langues (43, 44) avec les régions de support.

8. Amortisseur d'oscillations de torsion selon l'une quelconque des revendications 4 à 7, **caractérisé en ce que** des éléments de butée (51, 52) pour l'une des pièces rotatives sont montés sur les accumulateurs d'énergie agissant dans la direction périphérique, lesquels présentent des ergots de commande (53, 54) pour les ressorts en boucle (28).

9. Amortisseur d'oscillations de torsion selon la revendication 8, **caractérisé en ce que** les éléments de butée (51, 52) présentent à chaque fois un corps de butée (60) depuis lequel une tige (65) s'étend dans l'accumulateur d'énergie associé (22).
